(19) **Europäisches Patentamt**
**European Patent Office**
**Office européen des brevets**

(11) **EP 3 492 947 A1**

(12) **EUROPEAN PATENT APPLICATION**
published in accordance with Art. 153(4) EPC

(43) Date of publication:
**05.06.2019 Bulletin 2019/23**

(51) Int Cl.:
*G01S 5/04* [(2006.01)]     *G08B 25/04* [(2006.01)]
*G08B 25/10* [(2006.01)]     *B64C 27/08* [(2006.01)]
*B64C 39/02* [(2006.01)]

(21) Application number: **17834306.7**

(22) Date of filing: **25.07.2017**

(86) International application number:
**PCT/JP2017/026845**

(87) International publication number:
**WO 2018/021300 (01.02.2018 Gazette 2018/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.07.2016 JP 2016149908**

(71) Applicant: **Nidec Corporation
Kyoto-shi, Kyoto 601-8205 (JP)**

(72) Inventors:
• **ITO Junji
Kyoto-shi
Kyoto 601-8205 (JP)**
• **LIU Huashi
Kyoto-shi
Kyoto 601-8205 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **SEARCH SYSTEM AND TRANSMITTER FOR USE IN SEARCH SYSTEM**

(57)     A vehicle according to the present disclosure includes: an antenna device to receive a wireless signal, a measuring device to measure a direction of arrival of the wireless signal received by the antenna device, a calculation circuit to estimate a position of the transmitter from the direction of arrival of the wireless signal as measured by the measuring device, and a localization device to output position information by estimating the vehicle's own position. The localization device outputs the position information of the vehicle at least when the calculation circuit has estimated the position of the transmitter.

FIG.13

POSITION ESTIMATION PROCESS BY MULTICOPTER

S1 — FLY WITH INSTRUCTION TO FLY

S2 — WIRELESS SIGNAL OUTPUT FROM TRANSMITTER IS DETECTED?
NO
YES

S3 — MEASURE DIRECTION OF ARRIVAL OF WIRELESS SIGNAL

S4 — ESTIMATE POSITION OF TRANSMITTER

S5 — ESTIMATE ITS OWN POSITION, AND OUTPUT POSITION INFORMATION

SEARCH MODE

**Description**

## TECHNICAL FIELD

The present disclosure relates to a search system, and a transmitter to be used in the search system.

## BACKGROUND ART

Patent Document 1 discloses a search target discovering unit which receives an electrical signal that is emitted from a signal generation device mounted on a target of search, and estimates the position of the target of search. The search target discovering unit includes a GPS device. Having received an electrical signal that is emitted from the signal generation device, the search target discovering unit transmits information of its own position, which was acquired by utilizing the GPS device, to another search target discovering unit or a position measurement device. The position measurement device receives a plurality of pieces of position information that are transmitted from the search target discovering unit(s), and performs three-point measurement to analyze the position at which the target of search exists.

By installing the search target discovering unit in a vehicle such as an automobile or an aircraft, and having a mountain climber or the like carry the signal generation device, if the mountain climber happens to be in distress, the presence of the person in distress can be known by using the search target discovering unit.

## CITATION LIST

### PATENT LITERATURE

[Patent Document 1] the specification of Japanese Patent No. 5890942

## SUMMARY OF INVENTION

### TECHNICAL PROBLEM

According to Patent Document 1, in order to perform three-point measurement, at least three search target discovering units must be placed on three vehicles.

One non-limiting, and exemplary embodiment of the present application provides: a search system which detects with at least one vehicle a wireless signal that is output from a transmitter, and searches for the transmitter; and a transmitter to be used in the search system.

### SOLUTION TO PROBLEM

In an exemplary embodiment, a search system according to the present disclosure is a search system which detects with at least one vehicle a wireless signal that is output from a transmitter and searches for the transmitter, the vehicle including: an antenna device to receive the wireless signal; a measuring device to measure a direction of arrival of the wireless signal received by the antenna device; a calculation circuit to estimate a position of the transmitter from the direction of arrival of the wireless signal as measured by the measuring device; and a localization device to output position information by estimating the vehicle's own position, wherein the localization device outputs the position information of the vehicle at least when the calculation circuit has estimated the position of the transmitter.

In another exemplary embodiment, a search system according to the present disclosure is a search system which detects with at least one vehicle a wireless signal that is output from a transmitter and searches for the transmitter, the search system comprising the vehicle, the transmitter, and the processing device, the vehicle including: an antenna device to receive the wireless signal; a localization device to output position information by estimating the vehicle's own position; and a communication circuit to transmit a processed signal which is obtained from the wireless signal that is received by the antenna device and transmit the position information, the processing device including: a communication circuit to receive the processed signal and the position information; and a calculation circuit to measure a direction of arrival of the wireless signal based on the processed signal, and further estimate a position of the transmitter from the direction of arrival of the wireless signal and the position information.

In an exemplary embodiment, a transmitter according to the present disclosure is a transmitter to be used in any of the above search systems, comprising: a primary battery; an IC circuit to operate on the primary battery to generate the wireless signal; and an antenna element to output the wireless signal.

## ADVANTAGEOUS EFFECTS OF INVENTION

According to an exemplary embodiment of the present disclosure, at least one vehicle which has received a wireless signal that has been transmitted from a transmitter is able to measure the direction of arrival of the wireless signal. The vehicle estimates its own position and outputs position information. This allows the position of the transmitter to be estimated.

According to another exemplary embodiment of the present disclosure, at least one vehicle receives a wireless signal that has been transmitted from a transmitter, and transmits a processed signal which is obtained from the wireless signal to a processing device. The processing device measures the direction of arrival of the wireless signal, and is able to estimate the position of the transmitter.

Since the position of the transmitter can be estimated with at least one vehicle, the cost for introducing a search system is reduced as compared to the case where always three or more vehicles are needed.

## BRIEF DESCRIPTION OF DRAWINGS

FIG. **1** is a diagram showing the construction of a search system **100**.

FIG. **2** is an outer perspective view of an exemplary multicopter **1** according to the present disclosure.

FIG. **3** is a side view of the multicopter **1**.

FIG. **4** is a diagram showing schematically showing a hardware construction for the multicopter **1**.

FIG. **5** is a diagram mainly showing an internal hardware construction for a flight controller **11**.

FIG. **6A** is a diagram showing the relationship between an antenna device **15** having M antenna elements constituting a linear array and a plurality of arriving waves **k** (k: an integer from 1 to K; the same also applies below; the meaning of K will be described later).

FIG. **6B** is a diagram showing the antenna device **15** receiving a $k^{th}$ arriving wave.

FIG. **7** is a diagram showing a geometric relationship for measuring the direction of arrival of a wireless signal as performed by a calculation circuit **10**.

FIG. **8** is a diagram showing a hardware construction for the processing device **40**.

FIG. **9** is a diagram showing an internal construction of a transmitter **50.**

FIG. **10** is a diagram showing how a magnesium-air battery **56** may be configured when not generating power.

FIG. **11** is a diagram showing a sealing lid **59** having slid.

FIG. **12** is an outer view of a life jacket **70** to be worn during activities at the sea or a river.

FIG. **13** is a diagram showing a procedure of a position estimation process for the transmitter **50** by the multicopter **1**.

FIG. **14** is a diagram showing a procedure of processing by the multicopter **1** and the processing device **40** according to the second implementation.

FIG. **15** is a diagram showing a method of detecting a wireless signal that is transmitted from the transmitter **50** by using three multicopters **1a, 1b** and **1c.**

FIG. **16** is a diagram showing an exemplary operation where the multicopter **1a** detects a wireless signal from the transmitter **50.**

FIG. **17** is a diagram showing multicopters **1b** and **1c** which have flown near the multicopter **1a.**

FIG. **18** is a diagram showing an exemplary flying method where the position of the transmitter **50** is estimated with a higher accuracy by using a single multicopter **1.**

## DESCRIPTION OF EMBODIMENTS

Hereinafter, with reference to the attached drawings, exemplary constructions of a search system according to the present disclosure and a transmitter to be used in the search system will be described. Note however that unnecessarily detailed descriptions may be omitted. For example, detailed descriptions on what is well known in the art or redundant descriptions on what is substantially the same constitution may be omitted. This is to avoid lengthy description, and facilitate the understanding of those skilled in the art. The accompanying drawings and the following description, which are provided by the inventors so that those skilled in the art can sufficiently understand the present disclosure, are not intended to limit the scope of claims. In the present specification, identical or similar constituent elements are denoted by identical reference numerals.

1. construction and outline of search system

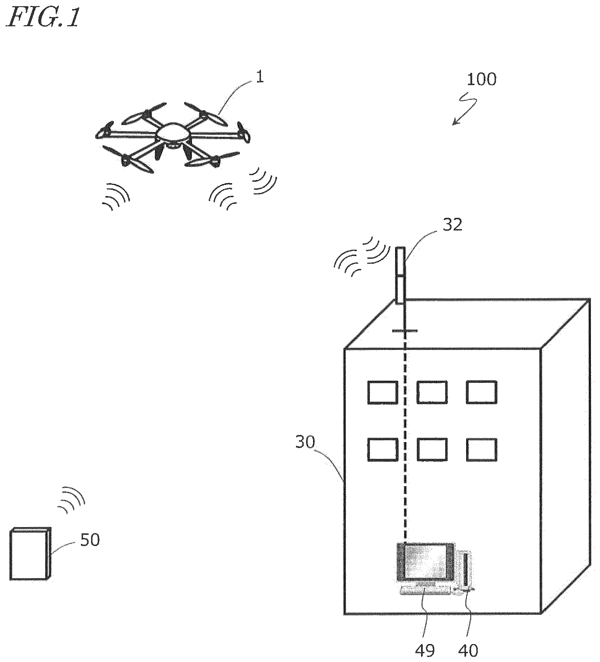

First, with reference to FIG. **1**, a process to be performed by using a search system according to the present disclosure, which includes a vehicle, will be described in outline. The vehicle is typically an aircraft such as a multicopter, irrespective of whether it is unmanned or manned. A multicopter will be described as an example below.

FIG. **1** shows the construction of a search system **100**. The search system **100** includes a multicopter **1**, a position estimation processing device **40** within a search and rescue center facility **30,** and a transmitter **50**. Hereinafter, the position estimation processing device **40** will be abbreviated as "the processing device **40"**.

In the search system **100** according to the present disclosure, generally two implementations are possible in use: a first implementation in which a process of estimating the position of the transmitter **50** is performed by the multicopter **1**; and a second implementation in which a process of estimating the position of the transmitter **50** is performed by the externally-provided processing device **40**. Specifics of the two implementations are as follows.

In the first implementation, the multicopter **1** uses an antenna device to detect a wireless signal which is output from the transmitter **50**, and measures the direction of arrival of the wireless signal by using a measuring device which is mounted in the multicopter **1**. Furthermore, a calculation circuit in the multicopter **1** performs a process of searching for the transmitter **50** from the direction of arrival of the wireless signal. Once the position of the transmitter **50** is estimated, together with information of the position of the transmitter **50**, the multicopter **1** transmits position information which is obtained by estimating its own position by using the Global Positioning System (hereinafter referred to as "GPS") or the like, to the processing device **40** in the search and rescue center facility **30**. Note that two or more multicopters **1** may be used.

In the second implementation, the multicopter **1** detects a wireless signal which is output from the transmitter **50,** and transmits it to the externally-provided processing device **40** as a processed signal which has undergone a predetermined process. At this time, the multicopter **1** also transmits to the processing device **40** position information which is obtained by estimating its own position by using a GPS unit or the like. By using the processed signal obtained from the multicopter **1**, the processing device **40** measures the direction of arrival of the wireless signal, and performs a process of searching for the transmitter **50** from the measured direction of arrival and the position information of the multicopter **1**.

In either implementation, an antenna device having a plurality of antenna elements which are arranged in an array is mounted on at least one multicopter **1**, and a wireless signal that is transmitted from the transmitter is received with the antenna device. Then, at the multicopter **1,** or at the processing device **40**, the direction of arrival of the wireless signal is measured. Since presence of a plurality of multicopters **1** is not a requirement, the cost for introducing the search system **100** is reduced relative to the case where three or more multicopters **1** are always required as in Patent Document **1**.

Moreover, the present disclosure describes a transmitter **50** that is suitably used in the search system **100** of either implementation.

For example, when the signal generation device described in Patent Document 1 is to be carried by a person, usually the signal generation device needs to be powered at all times in order to cope with an inadvertent fall, an avalanche, etc. As a result, it may be possible that, when in distress, the remaining power of the battery of the signal generation device may already have lowered, thereby hindering the rescue activity. Also, in a situation where electrical signals are being transmitted from all signal generation devices all the time, an electrical signal that is emitted from the signal generation device of a person in distress needs to be identified from among a multitude of electrical signals.

Therefore, in the present disclosure, a transmitter **50** will be illustrated which will begin emission of a wireless signal only in distress, for example. The transmitter **50** includes a magnesium-air battery which begins power generation when a liquid containing an electrolyte is injected therein. In a distress incident in the mountains, a bearer of the transmitter **50** may inject the water that he or she carries, or water which is obtained from a stream or snow, into the battery. Alternatively, in the case of drowning at the sea or in a river, a bearer of the transmitter **50** who has attached the transmitter **50** onto his or her life vest may automatically allow water from the sea or the river to be injected into the battery.

For example, upon detecting that emission of a wireless signal has begun as electric power is supplied to the processing device **40** being installed in the search and rescue center facility **30** transmitter **50**, an audio, a screen indication, or a lamp is activated indicating that a search-requiring situation (e.g., a disaster or a distress situation) has occurred, and is notified to the operator of the system **100**. As mentioned above, in either the first implementation or the second implementation, the position of the transmitter **50** has been estimated by the search system **100.** As a result of this, the system operator is able to swiftly commence rescue activities, such as organizing and dispatching a search team. The battery of the transmitter **50** possesses sufficient electric power because it has never been used prior to the occurrence of the search-requiring situation, and thus is able to stably continue operation during the rescue activity.

Next, the multicopter **1**, the processing device **40**, and the transmitter **50** will be described in detail. The following description will illustrate a construction which is adapted to the aforementioned first implementation.

2. construction of multicopter

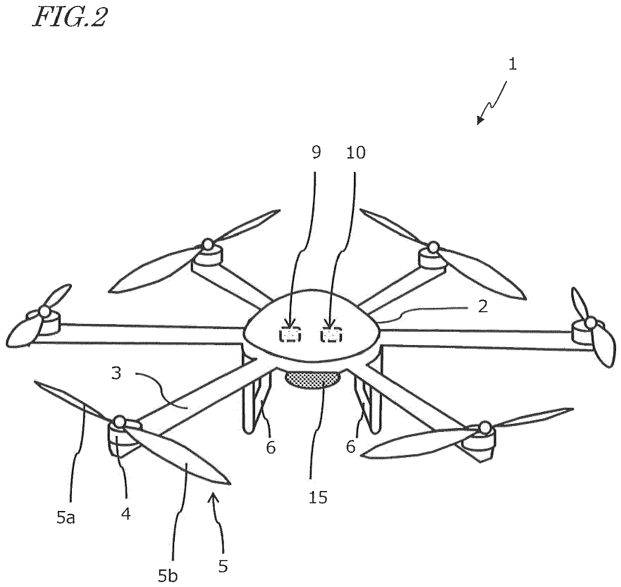

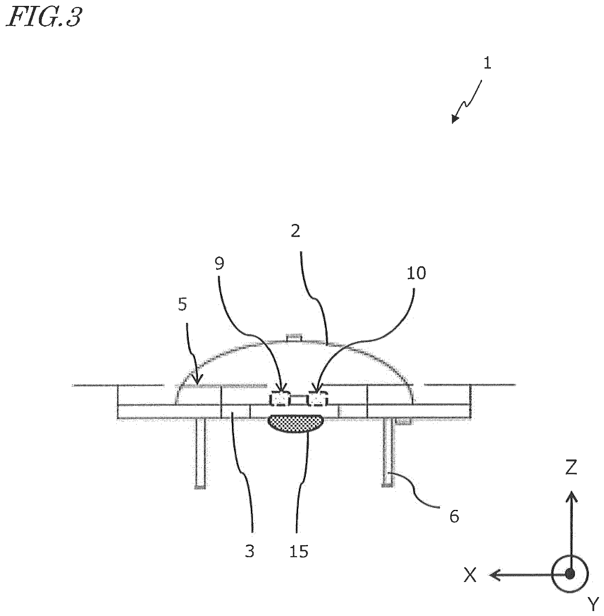

FIG. **2** is an outer perspective view of an exemplary multicopter **1** according to the present disclosure. FIG. **3** is a side view of the multicopter **1**.

The multicopter **1** flies in the sky over e.g. a mountain range, the sea, or a river, and detects a wireless signal which is output from the transmitter **50**. By utilizing the GPS, the multicopter **1** autonomously flies in a predetermined airspace. As will be described later, upon detecting a wireless signal that is transmitted from the transmitter **50,** the multicopter **1** operates in a search mode to search for the position of the transmitter **50.**

The multicopter **1** includes a central housing **2,** a plurality of arms (as exemplified by an arm **3**) extending out from the periphery of the central housing **2,** and a plurality of legs **6** extending below the central housing **2.** Hereinafter, an exemplary construction related to the arm **3** will be described; anything that applies to the construction of this arm **3** similarly applies to any other arm.

At the tip end of the arm **3** (i.e., the opposite end from the central housing **2**), a motor **4** is provided. A rotor **5** is provided on the axis of rotation of the motor **4**. As the motor **4** rotates, the rotor **5** also rotates, thus giving lift for the multicopter **1**. In the present specification, the number of rotors **5** provided on a single multicopter **1** may be arbitrary so long as the flight as will be described below is possible.

Each rotor **5** that is attached to a motor **4** includes a plurality of blades **5a** and **5b** that extend from its axis of rotation. However, there may be three or more blades. From standpoints such as strength, weight, etc., the rotors **5** are preferably made of carbon-fiber-reinforced plastic (CFRP).

The multicopter **1** includes an antenna device **15** to receive a wireless signal from the transmitter **50**, a measuring device **9** to measure the direction of arrival of the wireless signal received by the antenna device **15,** and a calculation circuit **10** to estimate the position of the transmitter **50** from the direction of arrival of the wireless signal having been measured by the measuring device **9**. Details of the processing by the measuring device **9** and the calculation circuit **10** will be described later.

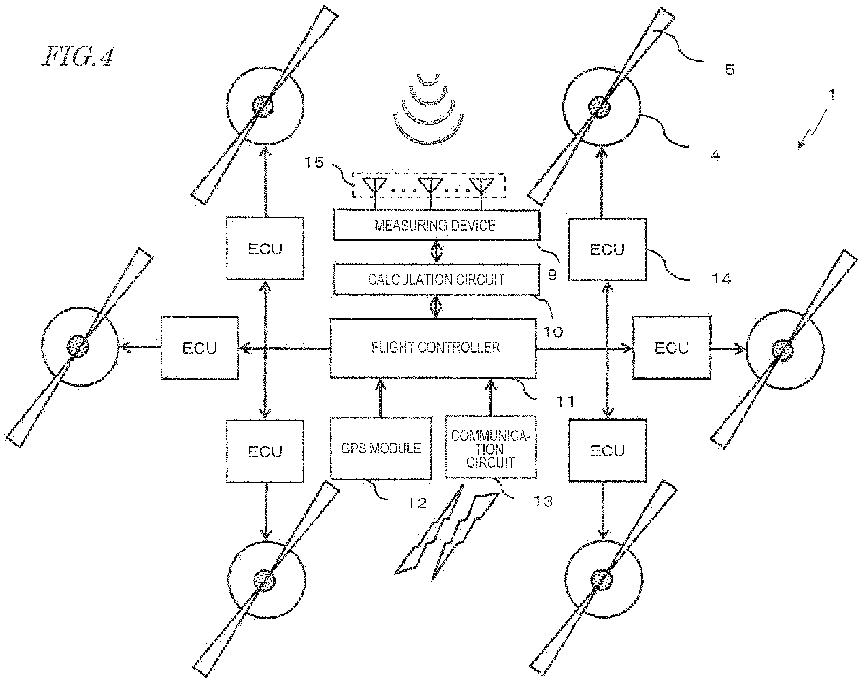

FIG. **4** schematically shows a hardware construction for the multicopter **1**.

The multicopter **1** includes the measuring device **9,** the calculation circuit **10,** a flight controller **11,** a GPS module **12,** a communication circuit **13,** electronic control units **14** (ECUs **14**) and an antenna device **15.** Among these, the flight controller **11** controls the operation of the multicopter **1**.

The flight controller **11** receives information and/or manipulation signals from the radar system **10,** the GPS module **12,** and the reception module **13**, subjects them to predetermined processing in order to conduct flight, and outputs a control signal to each ECU **14**. Moreover, upon receiving a wireless signal that is transmitted from the transmitter **50** via the antenna device **15,** the flight controller **11** causes the measuring device **9** to measure the direction of arrival of the wireless signal. Furthermore, the flight controller **11** causes the calculation circuit **10** to estimate the position of the transmitter **50** from the direction of arrival of the wireless signal as measured by the measuring device **9.** However, the measuring device **9** and the calculation circuit **10** may not be controlled by the flight controller **11.** For example, when a predetermined input is made from the antenna device **15,** the measuring device **9** may perform a predetermined process of measuring the direction of arrival of the wireless signal. Moreover, upon receiving information indicating the direction of arrival of the wireless signal from the measuring device, the calculation circuit **10** may perform a predetermined operation of estimating the position of the transmitter **50.**

Each ECU **14** controls rotation of the motor **4** based on the control signal. By controlling rotation of all of the motors **4,** the flight controller **11** can cause the multicopter 1 to move forward, move backward, circle, stay still in the air, or move up or down. In causing the multicopter **1** to move forward or move backward, the attitude of the multicopter **1** may be controlled so that it is leaning forward or leaning backward. As an implementation of rotational control for the motor **4,** PMW (Pulse Width Modulation) may be utilized, for example. In this case, each ECU **14** controls the power to be supplied to the motor **4** by altering the PWM duty ratio.

Instead of the motor **4,** an engine which burns a liquid fuel to rotate may be adopted.

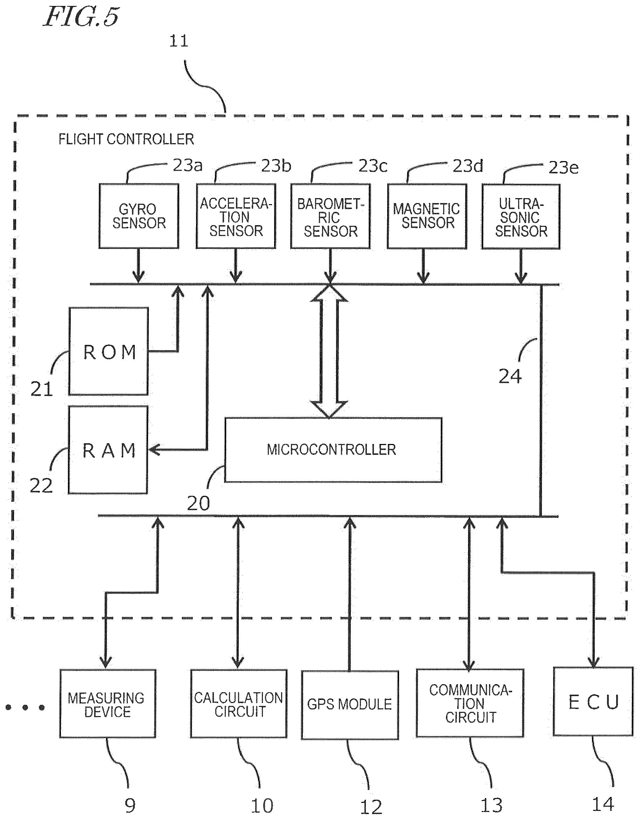

FIG. **5** mainly shows an internal hardware construction of the flight controller **11.**

The flight controller **11** includes a microcontroller 20, a ROM **21**, a RAM **22,** and a sensor group, which are interconnected via an internal bus **24** so as to be capable of communicating with one another. Via a communication interface not shown, the flight controller **11** is connected to the GPS module **12,** the communication circuit **13,** and the plurality of ECUs **14**. A data signal which is input via the communication interface is transmitted inside the flight controller **11** via the internal bus **24,** and acquired by the microcontroller **20**. Hereinafter, this will be described more specifically. Note that processing by the microcontroller **20** is realized as a computer program which is stored in the ROM **21** and laid out on the RAM **22** is executed by the microcontroller **20.**

The microcontroller **20** acquires signals that have been detected by the sensor group. The sensor group may include, for example, a three-axis gyro sensor **23a,** a three-axis acceleration sensor **23b**, a barometric sensor **23c,** a magnetic sensor **23d,** an ultrasonic sensor **23e,** and so on.

The three-axis gyro sensor **23a** detects a forward-backward inclination, a right-left inclination, and an angular rate of rotation, thus grasping the attitude and motion of the multicopter body. The three-axis acceleration sensor **23b** detects acceleration along the front-rear direction, the right-left direction, and the up-down direction. Note that the three-axis gyro sensor and the three-axis acceleration sensor may be implemented by a single module. Such a module may be referred to as a "six-axis gyro sensor". The barometric sensor **23c** grasps the altitude of the multicopter body based on differences in barometric pressure. The magnetic, sensor **23d** detects azimuth. The ultrasonic sensor **23e** emits an ultrasonic wave immediately below and detects a reflection signal to grasp the distance from the ground. Note that the ultrasonic sensor **23e** is to be used at a predetermined altitude not far from the ground.

Furthermore, the microcontroller **20** acquires information of the current position of the multicopter **1** from the GPS module **12**. The "current position" includes information of a latitude, a longitude, and an altitude around the globe. The GPS module **12** receives radio waves from a plurality of artificial satellites (GPS satellites) and computes a distance between itself and each GPS satellite, so as to output information indicating the current position. By utilizing at least four artificial satellites, the GPS module **12** is able to output information indicating the latitude, longitude, and altitude of the multicopter **1** anywhere around the globe.

The microcontroller **20** acquires a manipulation signal from the communication circuit **13**. The manipulation signal is transmitted from the search and rescue center facility **30** via an antenna device **32,** for example. For example, the manipulation signal is a signal instructing the multicopter **1** to begin flight or return. In the present specification, the airspace for the multicopter **1** to fly is predefined, and the multicopter **1** autonomously flies in the airspace upon receiving an instruction to begin flight. When receiving a manipulation signal designating a return, or when the remaining power of the battery (not shown) becomes equal to a predetermined level or lower, the multicopter **1** returns to the search and rescue center facility **30.**

Based on signals which are acquired from the sensor group, or on an externally acquired signal, the microcontroller **20** outputs appropriate control signals to the ECUs **14**. Upon receiving the control signal, each ECU **14** drives the motor **4**. Specifically, each ECU **14** alters the rotational speed of the motor **4,** or the control signal which it outputs to rotate the motor **4.**

Note that the GPS module **12** is an example for acquiring information of the current position of the multicopter **1**. As another example of acquiring information of the current position of the multicopter **1**, when the communication circuit **13** supports radio waves of a mobile phone frequency, for example, the radio wave intensities from a plurality of base stations for the mobile phone, etc., may be utilized to acquire information of the current position. Also, accurate position information when beginning flight may be acquired, and information of the current position during flight may be acquired by further utilizing the aforementioned gyro sensor **23a,** the three-axis acceleration sensor **23b,** the barometric sensor **23c**, the magnetic sensor **23d**, and the ultrasonic sensor **23e** during flight. In the present specification, any device including the GPS module **12** and the various aforementioned sensors that is capable of acquiring position information will be collectively referred to as a "localization device".

Moreover, based on the position information that is acquired by using the "localization device", the flight controller **11** controls rotation of each of the plurality of motors **4** or engines. As a result, the flight controller **11** is able to control autonomous flight in a predetermined airspace or in an airspace that is designated by the processing device **40**. As such, the flight controller **11** may be referred to as an "autonomous flight unit".

Next, the antenna device **15** and the measuring device **9** will be described. For example, the antenna device **15** is an array antenna in a two-dimensional (planar) arrangement, and the measuring device **9** is a microcomputer which performs the following process. Although the process performed by the measuring device **9** is a process of "estimating" the direction of arrival of a wireless signal, this process will be described as "measuring" in the present specification.

For simplicity of description, one row of antenna elements constituting a linear array within an array antenna in a two-dimensional arrangement will be discussed, and a technique of estimating the direction of arrival of a signal wave impinging on this one of antenna elements will be described.

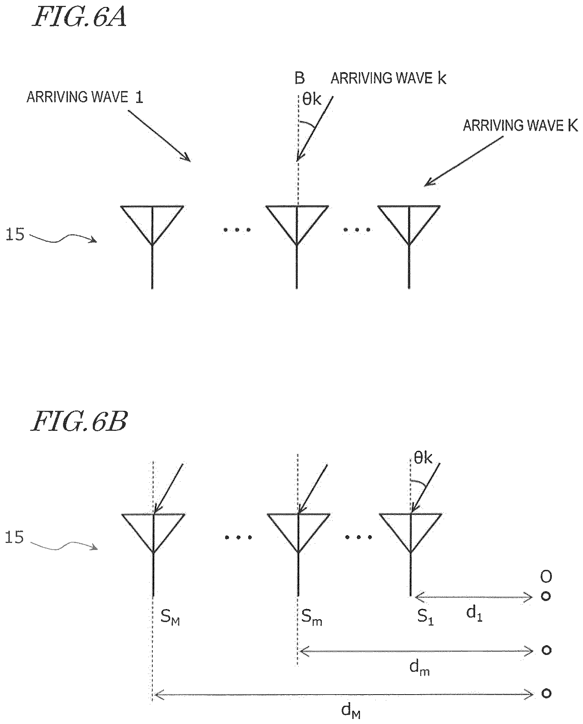

FIG. **6A** shows a relationship between an antenna device **15** having M antenna elements constituting a linear array and a plurality of arriving waves **k** (k: an integer from 1 to K; the same also applies below; the meaning of K will be described later). Each arriving wave is a wireless signal. Although the wireless signals are conveniently illustrated as coming from above in the figure, the wireless signals are being transmitted from a transmitter **50** which is on the ground surface or water in the example of the present embodiment.

The antenna device **15** receives plural arriving waves that simultaneously impinge at various angles. The incident angle of each arriving wave (i.e., an angle representing its direction of arrival) is an angle with respect to the broadside B (i.e., a direction which is perpendicular to the direction of the line along which the antenna elements are arrayed) of the antenna device **15**.

Now, consider a $k^{th}$ arriving wave. Where K arriving waves are impinging on the array antenna from K targets existing at different azimuths, a "$k^{th}$ arriving wave" means an arriving wave which is identified by an incident angle $\theta_k$.

FIG. **6B** shows the antenna device **15** receiving the $k^{th}$ arriving wave. The signals received by the antenna device **15** can be expressed as a "vector" having M elements, by Math. 1.

(Math. 1)

$$S = [s_1, s_2, \ldots, s_M]^T$$

In the above, $s_m$ (where m is an integer from 1 to M; the same will also be true hereinbelow) is the value of a signal which is received by an $m^{th}$ antenna element. The superscript T means transposition. S is a column vector. The column vector S is defined by a product of multiplication between a direction vector (a steering vector or a mode vector) as determined by the construction of the array antenna and a complex vector representing a signal from each wave source (signal source). When the number of wave sources is K, the waves of signals arriving at each individual antenna element from the respective K wave sources are linearly superposed. In this state, $s_m$ is known to be expressible by Math. 2.

[Math. 2]

$$s_m = \sum_{k=1}^{K} a_k \exp\left\{ j\left(\frac{2\pi}{\lambda} d_m \sin\theta_k + \varphi_k\right) \right\}$$

In Math. 2, $a_k$, $\theta_k$ and $\varphi_k$ respectively denote the amplitude, incident angle (i.e., an angle representing the direction of arrival), and initial phase of the $k^{th}$ arriving wave. Moreover, $\lambda$ denotes the wavelength of an arriving wave, and j is an imaginary unit.

As will be understood from Math. 2, $s_m$ is expressed as a complex number consisting of a real part (Re) and an imaginary part (Im).

When this is further generalized by taking noise (internal noise or thermal noise) into consideration, the array reception signal X can be expressed as Math. 3.

(Math. 3)

$$X = S + N$$

N is a vector expression of noise.

The measuring device **9** generates a spatial covariance matrix Rxx (Math. 4) of arriving waves by using the array reception signal X expressed by Math. 3, and further determines eigenvalues of the spatial covariance matrix Rxx.

[Math. 4]

$$R_{xx} = XX^H = \begin{bmatrix} Rxx_{11} & \cdots & Rxx_{1M} \\ \vdots & \ddots & \vdots \\ Rxx_{M1} & \cdots & Rxx_{MM} \end{bmatrix}$$

In the above, the superscript H means complex conjugate transposition (Hermitian conjugate).

Among the eigenvalues, the number of eigenvalues which have values equal to or greater than a predetermined value that is defined based on thermal noise (signal space eigenvalues) corresponds to the number of arriving waves. Then, angles that produce the highest likelihood as to the directions of arrival of reflected waves (i.e. maximum likelihood) are calculated, whereby the number of targets and the angles at which the respective targets are present can be identified. This process is known as a maximum likelihood estimation technique.

Through the above process, the measuring device **9** outputs an angle $\theta$ that takes the largest value as the azimuth at which the transmitter **50** exists. Note that the method of estimating the angle $\theta$ indicating the direction of arrival of an arriving wave is not limited to this example. Various algorithms for direction-of-arrival estimation that have been mentioned earlier can be employed. For example, with a maximum likelihood estimation technique such as the SAGE (Space-Alternating Generalized Expectation-maximization) method, azimuths of plural arriving waves with high correlation can be detected by utilizing information on the number of arriving waves. Since maximum likelihood estimation techniques such as SAGE are known techniques, detailed descriptions thereof are omitted. The azimuth of arrival of a radio wave may be estimated by using an amplitude monopulse method.

When one row of antenna elements constituting a linear array is used, the direction of arrival of a wireless signal can be estimated regarding the direction (first direction) along which wireless signals impinging on the row of antenna elements will have phase differences. However, regarding a second direction which is perpendicular to the first direction, the direction of arrival of a wireless signal cannot be estimated. In order to estimate a direction of arrival regarding the second direction, it is necessary to use antenna elements that are arranged in a two-dimensional (planar) array. Since techniques for calculating the first direction and the second direction by using antenna elements which are arranged in a two-dimensional array are well known, any detailed description thereof will be omitted in the present specification.

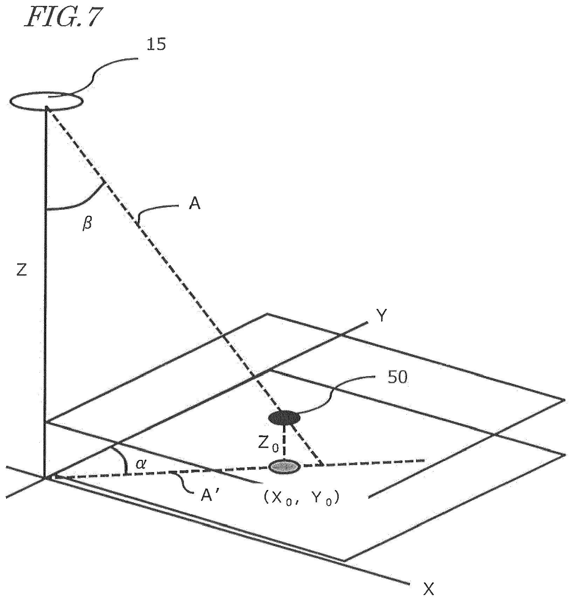

FIG. **7** shows a geometric relationship for measuring the direction of arrival of a wireless signal as performed by the calculation circuit **10**. An X axis, a Y axis, and a Z axis are taken as shown in the figure. The XY plane is a ground surface or a water surface. The Z axis represents the height direction. FIG. **7** illustrates the transmitter **50** being at a higher position than the ground surface (e.g. the middle of a cliff). In the case where the transmitter **50** is situated on a water surface, the transmitter **50** will be located on the XY plane.

With the measuring device **9**, the direction of arrival of a wireless signal that is transmitted from the transmitter **50** is measured. The direction of arrival consists of an angle $\alpha$ in an azimuth direction and an angle $\beta$ in an elevation direction. The angle $\alpha$ in an azimuth direction is an angle that is created by: a line **A'**, which is a projection on the XY plane of a line **A** that connects the antenna device **15** and the transmitter **50**; and the Y axis. The angle $\beta$ in an elevation direction is an angle that is created by the line **A** and the Z axis. By using the angles $\alpha$ and $\beta$ and information of the current altitude of the multicopter **1**, the calculation circuit **10** is able to estimate the position of the transmitter **50**.

In the case where the transmitter **50** is situated on a water surface, for example, the calculation circuit **10** estimates the transmitter **50** to be present at the position of an intersection between the line **A** and the water surface. If the multicopter **1** retains information of a topographic map, the calculation circuit **10** may refer to the information of the topographic map in order to recognize whether or not the transmitter **50** is situated on a water surface. Alternatively, the calculation circuit **10** may recognize whether or not the transmitter **50** is situated on a water surface on the basis of a notification from the processing device **40**.

In the case where the transmitter **50** is situated on land, such that the multicopter **1** retains information of a topographic map, for example, the calculation circuit **10** may refer to the information of the topographical map to determine that a topographical feature such as a cliff exists at the intersection between the line **A** and the ground surface. In that case, the calculation circuit **10** estimates the transmitter **50** to be present at the position $(X_0, Y_0, Z_0)$ of the intersection between the line **A** and the cliff.

Through the above process, the multicopter **1** is able to estimate the position of the transmitter **50**.

Note that Quuppa Oy in Finland provides a locating system utilizing the position estimation technique. In the present embodiment, this locating system can be utilized.

3. construction of position estimation processing device

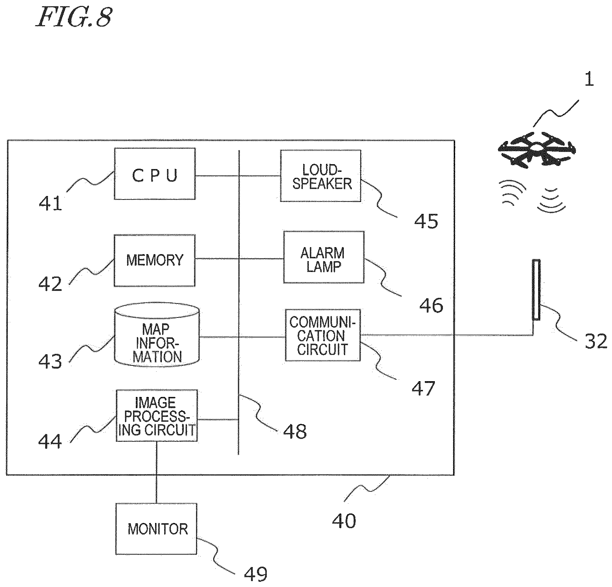

FIG. **8** shows a hardware construction for the processing device **40.**

The processing device **40** includes a central processing unit (CPU) **41**, a memory **42**, map information **43,** an image processing circuit **44**, a loudspeaker **45**, an alarm lamp **46,** and a communication circuit **47**, which are connected via an internal bus **48**. A monitor **49** is connected to the processing device **40**. The processing device **40** is a typically computer system such as a PC. Alternatively, the processing device **40** may be a portable terminal such as a smartphone, a tablet computer, or a laptop computer.

Via the antenna device **32** of the search and rescue center facility **30**, the communication circuits **47** receives a wireless signal representing an estimated position of the transmitter and position information from the multicopter **1**, and transmit them to the CPU **41**. In response to receiving such information, the CPU **41** notifies an operator of the search system **100** that a search-requiring situation (e.g., a disaster or a distress situation) has occurred.

For example, the CPU **41** may refer to the map information **43** by utilizing an estimated position of the transmitter and position information of the multicopter **1**. The map information **43** contains a map of an expected area of search and data of a topographic map. The CPU **41** generates a premeditated message and a map image in which an estimated position of the transmitter **50** is identifiably indicated, causes the image processing circuit **44** to process these, and causes the monitor **49** to display them. Alternatively, the CPU **41** outputs audio data which was previously retained in the memory **42,** from the loudspeaker **45**. Alternatively, the CPU **41** causes the alarm lamp **46** to flicker in a flicker pattern which was previously retained in the memory **42**. As a result of this, the operator is able to swiftly commence rescue activities, such as organizing and dispatching a search team. Note that it is not essential to provide the image processing circuit **44**. Instead of the image processing circuit **44**, the CPU **41** may perform the same process.

In the present specification, a device which outputs a visual, aural, or tactile stimulation for invoking human attention may be referred to as an "output device". The monitor **49**, the loudspeaker **45,** and the alarm lamp **46** are encompassed within an output device. Moreover, a motor which outputs a tactile stimulation through vibration is also encompassed within an output device.

4. construction of transmitter

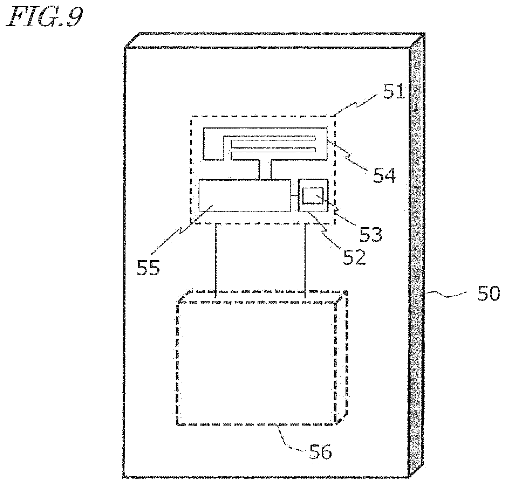

FIG. **9** shows an internal construction of the transmitter **50.** The transmitter **50** includes a wireless circuit **51** and a magnesium-air battery **56.** The wireless circuit **51** includes a storage device **52,** an antenna element **54,** and an IC circuit **55.** The storage device **52,** which may be e.g. a flash ROM, stores a unique piece of identification information **53** for each transmitter **50.** Once electric power is supplied from the magnesium-air battery **56,** the IC circuit **55** generates an RF signal of a predetermined frequency, and periodically transmits it via the antenna element **54.**

The magnesium-air battery **56** is a primary battery, and begins power generation as a liquid containing an electrolyte such as water is injected therein. Until a liquid is injected, the magnesium-air battery **56** can be preserved for a long period of time, e.g., ten or more years, without deterioration. The bearer may manually inject a liquid when desiring to be searched for.

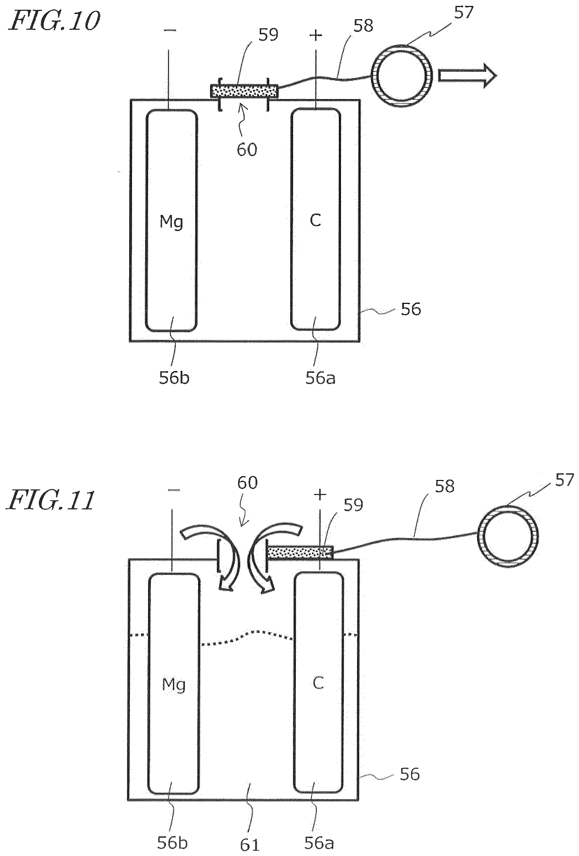

FIG. **10** shows how the magnesium-air battery **56** may be configured when not generating power. The magnesium-air battery **56** includes a positive electrode **56a** which is composed of carbon and a negative electrode **56b** which is composed of magnesium. The magnesium-air battery **56** has a ring **57,** a sealing lid **59,** and a cord **58** that connects the ring **57** and the sealing lid **59.**

The sealing lid **59** closes a liquid inlet **60.** As the bearer pulls the ring **57,** the sealing lid **59** slides. FIG. **11** shows the sealing lid **59** having slid. As a result of this, the bearer is able to inject a liquid through the liquid inlet **60.** FIG. **11** shows the liquid **61** having been injected.

Since very little electric power is required for the generation and transmission of a wireless signal, even if the transmitter **50** has an approximate size of a business card, the magnesium-air battery **56** is able to generate electric power for transmitting wireless signals for about one week. The transmitter **50** transmits a wireless signal having a frequency of 2.4 GHz that is compliant with Bluetooth (registered trademark) 4.0 (also called "BLE"), which is a short-range wireless communication standard of low power consumption. In the outdoors with clear view, with no other wireless equipment around, a wireless signal can travel about 300 m to about 1 km. The antenna device **15** of the multicopter **1** also receives a wireless signal of specifications that are compliant with the same standard as the communication standard of the transmitter **50.**

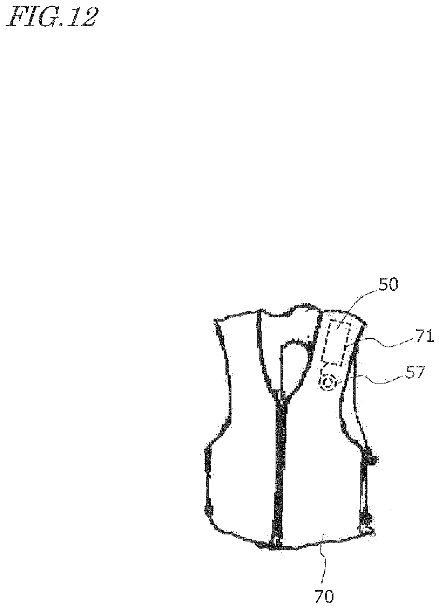

FIG. **12** is an outer view of a life jacket **70** to be worn during activities at the sea or a river. The life jacket **70** has a pocket **71,** where the transmitter **50** can be attached. In case of a fall at the sea or a river, the person who has fallen may pull on the ring **57,** thus allowing water in the surroundings to be injected into the magnesium-air battery **56,** which will then begin power generation. Thereafter, wireless signal transmission will be continuously performed. Since the magnesium-air battery **56** of the transmitter **50** has never been used prior to the occurrence of the search-requiring situation, it has sufficient electric power. Therefore, wireless signal transmission can be stably continued until position estimation by the multicopter **1** and until arrival of a rescue squad.

The position of the pocket **71** is preferably a position which allows water to be injected into the magnesium-air battery **56** while the person wearing it keeps drifting and which will be free from submersion so that wireless signal transmission will be enabled. The sealing lid **59** may be omitted so that a liquid will automatically go into the magnesium-air battery **56** when a fall into water occurs.

5. position estimation process by multicopter 1

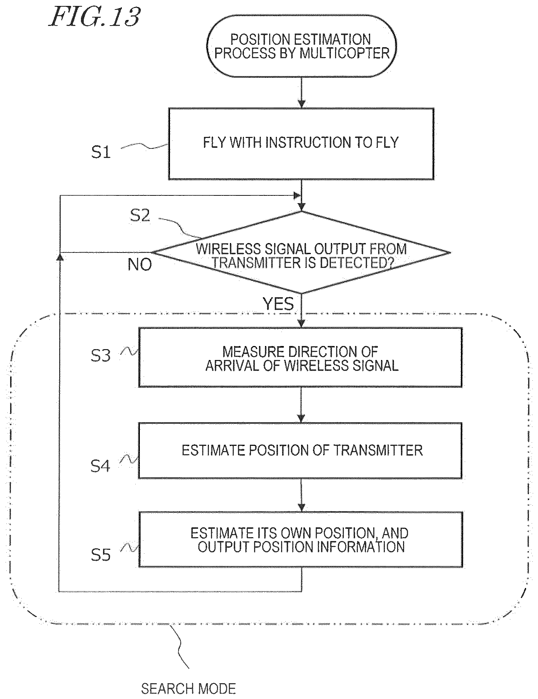

FIG. **13** shows a procedure of a position estimation process for the transmitter **50** by the multicopter **1.**

At step **S1,** the flight controller **11** of the multicopter **1** flies in accordance with an instruction to fly from the processing device **40** in the search and rescue center facility **30.** During flight, electric power is continuously supplied to the antenna device **15** so that wireless signals can be received.

At step **S2,** the measuring device **9** determines whether a wireless signal which has been output from the transmitter **50** was detected or not. The measuring device **9** repeats the determination of step **S2** until a wireless signal which has been output from the transmitter **50** is detected. Upon detecting a wireless signal, the measuring device **9** executes the process of step **S3.** Note that steps **S1** and **2** are a normal flight mode to be applied until a wireless signal is detected, whereas steps **S3** to **S5** are a search mode for searching for the transmitter **50** due to the fact that a wireless signal has been detected.

At step **S3,** the measuring device **9** measures the direction of arrival of the wireless signal. At the next step **S4,** the calculation circuit **10** utilizes information indicating the direction of arrival of the wireless signal to estimate the position of the transmitter **50.** The process of measuring the direction of arrival of the wireless signal and estimating the position of the transmitter **50** is as has already been described.

At step **S5,** the flight controller **11** estimates the current position by utilizing the GPS module **12,** for example, and outputs position information to the processing device **40** in the search and rescue center facility **30** via the communication circuit **13.** At this time, the estimated position information of the transmitter **50** may also be transmitted together.

Through the above processing, discovery and rescue of the person to be rescued bearing the transmitter **50** can be achieved by using the multicopter **1**.

6. position estimation process by processing device

Next, an operation of the search system **100** operating according to the second implementation, which was explained at the beginning of the present embodiment, will be described. So far as the second implementation is concerned, the measuring device **9** and the calculation circuit **10** can be omitted from the multicopter **1**.

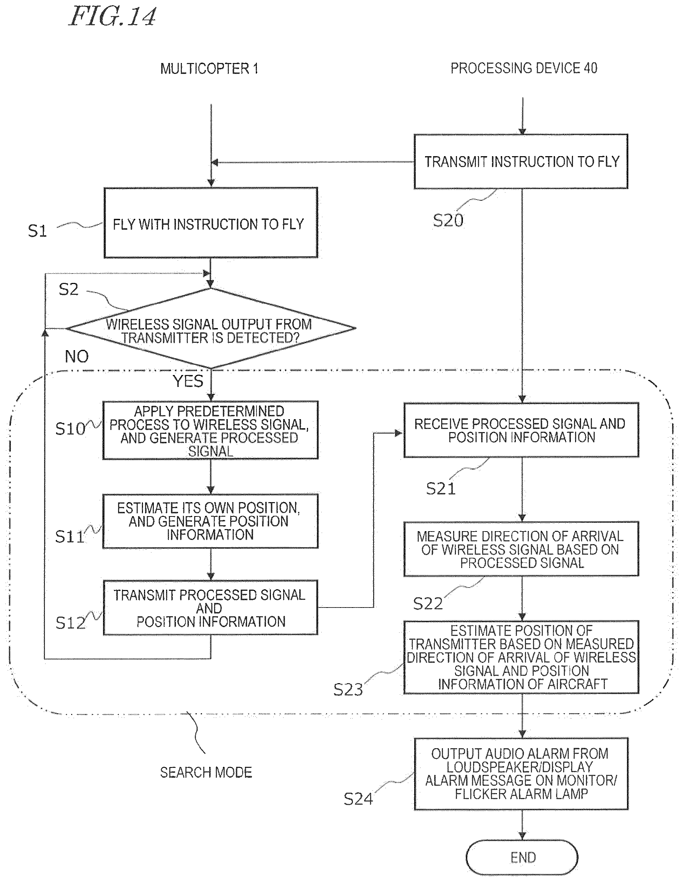

FIG. **14** shows a procedure of processing by the multicopter **1** and the processing device **40** according to the second implementation. First, at step **S20,** an instruction to fly is transmitted from the processing device **40** to the multicopter **1,** via the antenna **32**.

Thereafter, in the multicopter **1**, the aforementioned processes of steps **S1** and **S2** are performed. After this, operations under the search mode are performed by the multicopter **1** and the processing device **40**.

At step **S10,** the flight controller **11** of the multicopter **1** applies a predetermined process to a wireless signal to generate a processed signal. The "predetermined process" may be e.g. a filtering process for the wireless signal and a digitalization process. At step **S11,** the flight controller **11** estimates the current position by utilizing the GPS module **12,** for example, and generates position information.

At step **S12,** the processed signal and position information having been generated are transmitted to the processing device **40** via the communication circuit **13.**

Steps **S21** to **S24** are processes to be performed by the CPU **41** of the processing device **40.**

At step **S21,** the CPU **41** receives the processed signal and position information via the communication circuit **47.**

At step **S22,** based on the processed signal, the CPU **41** measures the direction of arrival of the wireless signal.

At step **S23,** based on the measured direction of arrival of the wireless signal and the position information of the multicopter **1,** the CPU **41** estimates the position of the transmitter **50.**

At step **S24,** the CPU **41** notifies the operator of the search system **100** that a search-requiring situation (e.g., a disaster or a distress situation) has occurred. Specifically, the CPU **41** causes the loudspeaker **45** to output an audio alarm, the monitor **49** to display an alarm message, and/or the alarm lamp **46** to flicker.

According to the processing of FIG. **14,** the multicopter **1** may not include the measuring device 9 and the calculation circuit **10,** so that the cost of the multicopter **1** can be reduced. Moreover, omission of the measuring device **9** and the calculation circuit **10** also reduces power consumption.

7. flying method of multicopter

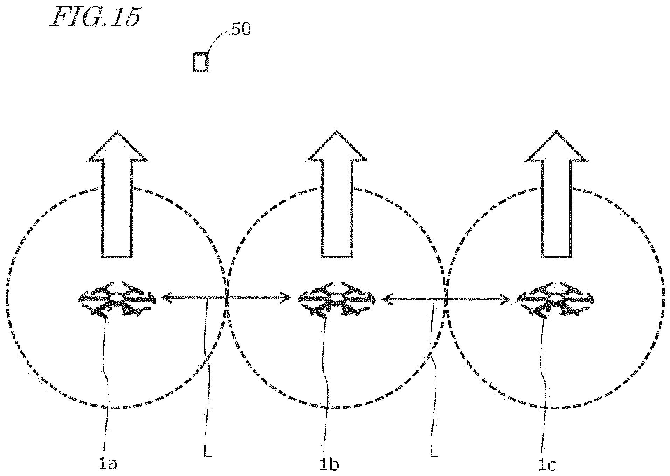

Next, with reference to FIGS. **15** through **18,** variants concerning the flying method of the multicopter **1** will be described.

FIG. **15** shows a method of detecting a wireless signal that is transmitted from the transmitter **50** by using three multicopters **1a, 1b** and **1c**. Given that each multicopter **1a, 1b**, **1c** is able to detect a wireless signal in a range with a radius of about 100 m, the multicopters **1a**, **1b** and **1c** may fly abreast at an interval **L** which is less than about 200 m. In other words, the interval **L** may be determined based on the range of detection capability of the multicopters. Note that it may be two multicopters **1**, or four or more multicopters **1**, that fly abreast.

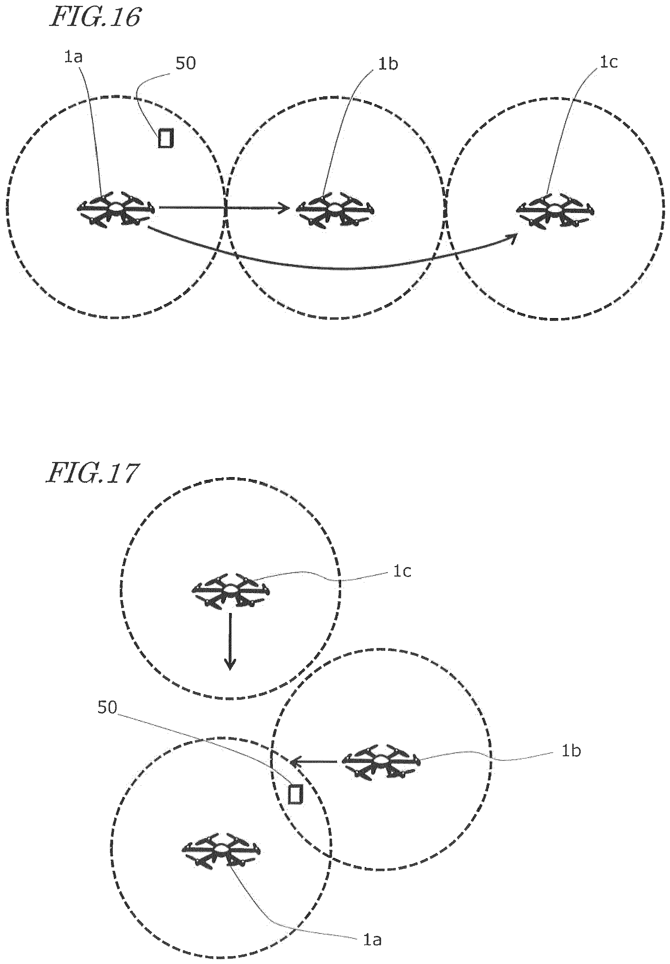

FIG. **16** shows an exemplary operation where the multicopter **1a** detects a wireless signal from the transmitter **50.** To the other multicopters **1b** and **1c**, the multicopter **1a** having detected the wireless signal transmits not only a notification that a wireless signal has been detected, but also position information that has been estimated by using the GPS module **12**.

Having received the notification, the multicopters **1b** and **1c** head for the multicopter **1a,** on the basis of the received position information of the multicopter **1a**. The purpose of this is to estimate the position of the transmitter **50** rapidly and with a higher accuracy.

FIG. **17** shows the multicopters **1b** and **1c** having flown near the multicopter **1a.** By flying near the multicopter **1a,** the multicopters **1b** and **1c** will also receive the wireless signal from the transmitter **50**. In this case, the multicopters **1a** through **1c** could estimate the position of the transmitter **50** via so-called three-point measurement. In other words, the transmitter **50** can be said to be present within a range where the ranges of detection capability of all of the multicopters **1a** through **1c** overlap.

Each of the multicopters **1a** through **1c** may estimate the position of the transmitter **50**. If consequently the estimated positions by two or all of the multicopters **1a** through **1c** are identical, a very high likelihood exists that the transmitter **50** is present at that position. This allows the transmitter **50** to be rapidly found, even in a place with rises and falls, especially in the mountains, etc.

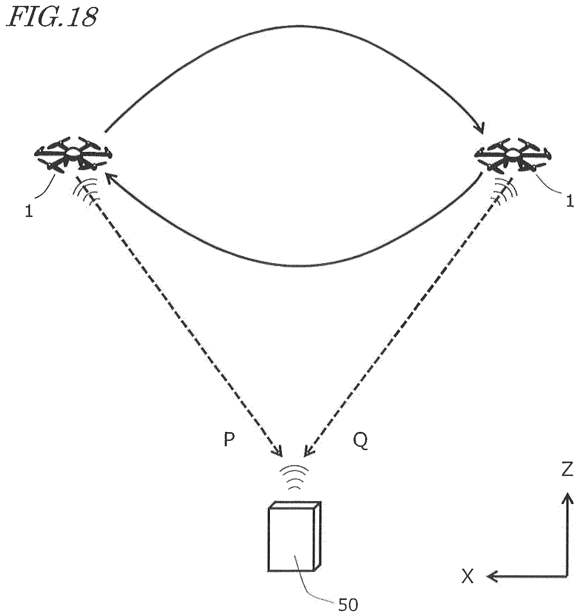

FIG. **18** shows an exemplary flying method where the position of the transmitter **50** is estimated with a higher accuracy by using a single multicopter **1**.

When the antenna device **15** of the multicopter **1** receives a wireless signal from the transmitter **50**, the flight controller **11** stops the multicopter **1** within the space in which the wireless signal was received. Since the antenna device **15** continuously receives the wireless signal, the calculation circuit **10** continuously estimates the position of the transmitter **50**. Since a process of estimating the position of the transmitter **50** is performed a plurality of times at the same position, a higher accuracy of position estimation can be obtained.

Alternatively, the multicopter **1** may work so that, when the antenna device **15** of the multicopter **1** receives a wireless signal from the transmitter **50**, the flight controller **11** causes the multicopter **1** to fly in circles within the space in which the wireless signal was received. Also while circling, the antenna device **15** continuously receives the wireless signal. Assume that the calculation circuit **10** estimates that the position of the transmitter **50** is in a direction **P** at one position of flight, and at another position of flight estimates that the position of the transmitter **50** is in a direction **Q**. Then, the flight controller **11** estimates an intersection between the estimated directions **P** and **Q** to be the position of the transmitter **50**. This allows the multicopter **1** to estimate the position of the transmitter **50** with a higher accuracy.

## INDUSTRIAL APPLICABILITY

The search system according to the present disclosure is broadly applicable to a search for a person, an animal, etc., that carries the transmitter **50**, or a search for an object having the transmitter **50** provided thereon.

## REFERENCE SIGNS LIST

**1**    multicopter

**9**    measuring device
**10**    calculation circuit
**11**    flight controller (autonomous flight unit)
**12**    GPS module
**13**    communication circuit
**14**    electronic control unit (ECU)
**15**    antenna device
**32**    antenna device
**30**    search and rescue center facility
**40**    position estimation processing device
**41**    CPU
**42**    memory
**43**    map information
**44**    image processing circuit
**45**    loudspeaker
**46**    alarm lamp
**47**    communication circuit
**48**    internal bus
**49**    monitor
**50**    transmitter
**51**    wireless circuit
**52**    storage device
**53**    identification information
**54**    antenna element
**55**    IC circuit
**56**    magnesium-air battery
**100**    search system

## Claims

**1.** A search system which detects with at least one vehicle a wireless signal that is output from a transmitter and searches for the transmitter,

the vehicle including:

an antenna device to receive the wireless signal;

a measuring device to measure a direction of arrival of the wireless signal received by the antenna device;

a calculation circuit to estimate a position of the transmitter from the direction of arrival of the wireless signal as measured by the measuring device; and

a localization device to output position information by estimating the vehicle's own position, wherein

the localization device outputs the position information of the vehicle at least when the calculation circuit has estimated the position of the transmitter.

2. A search system which detects with at least one vehicle a wireless signal that is output from a transmitter and searches for the transmitter,
the search system comprising the vehicle, the transmitter, and the processing device,
the vehicle including:

an antenna device to receive the wireless signal;

a localization device to output position information by estimating the vehicle's own position; and

a communication circuit to transmit a processed signal which is obtained from the wireless signal that is received by the antenna device and transmit the position information,

the processing device including:

a communication circuit to receive the processed signal and the position information; and

a calculation circuit to measure a direction of arrival of the wireless signal based on the processed signal, and further estimate a position of the transmitter from the direction of arrival of the wireless signal and the position information.

3. The search system of claim 1 or 2, wherein the transmitter includes:

a primary battery;

an IC circuit to operate on the primary battery to generate the wireless signal; and

an antenna element to output the wireless signal.

4. The search system of any of claims 1 to 3, wherein, the primary battery is a magnesium-air battery that begins power generation as a liquid is injected therein; and
the transmitter begins power generation as the liquid is automatically or manually injected into the primary battery when in need of a search, and begins to output the wireless signal.

5. The search system of any of claims 1 to 4, wherein the vehicle further includes a plurality of rotors and a plurality of motors or engines to rotate the plurality of rotors, and flies in the air.

6. The search system of claim 5, wherein the vehicle further includes an autonomous flight unit to control rotation of the plurality of motors or engines based on the position information as measured by the localization device.

7. The search system of claim 6, wherein,
when the antenna device of the vehicle has received the wireless signal,
the autonomous flight unit causes the vehicle to stop or move within a space in which the wireless signal was received, and the antenna device continuously receives the wireless signal, and
the calculation circuit continuously estimates the position of the transmitter.

8. The search system of claim 7, wherein,
the at least one vehicle is a plurality of vehicles including a first vehicle and a second vehicle; and
the first vehicle and the second vehicle fly with a predetermined interval therebetween.

9. The search system of claim 7 or 8, wherein,
the at least one vehicle is a plurality of vehicles including a first vehicle and a second vehicle; and,
when the antenna device of the first vehicle has received the wireless signal, the second vehicle acquires the position information of the first vehicle and moves near to the position of the first vehicle.

10. The search system of claim 5, wherein the vehicle flies based on an external instruction to fly.

11. The search system of claim 1, further comprising:

an output device to output a human visual, aural, and/or tactile stimulation based on a received signal to indicate that a search-requiring situation exists;
a communication circuit to receive the position information of the vehicle; and
a calculation circuit to, in response to receiving the position information, generate a signal for causing the output device to operate and transmitting the signal to the output device.

12. The search system of claim 2, wherein,
the processing device further includes an output device to output a human visual, aural, and/or tactile stimulation based on a received signal to indicate that a search-requiring situation exists;
the communication circuit receives the position information of the vehicle; and
in response to receiving the position information, the calculation circuit generates a signal for causing the output device to operate and transmits the signal to the output device.

13. A transmitter to be used in the search system of any of claims 1 to 12, comprising:

a primary battery;
an IC circuit to operate on the primary battery to generate the wireless signal; and
an antenna element to output the wireless signal.

14. The transmitter of claim 13, wherein,
the primary battery is a magnesium-air battery that begins power generation as a liquid is injected therein; and
the transmitter begins power generation as the liquid is automatically or manually injected into the primary battery when in need of a search, and begins to output the wireless signal.

FIG.1

FIG.2

FIG.3

FIG.4

*FIG.5*

FLIGHT CONTROLLER

11

23a    23b    23c    23d    23e

| GYRO SENSOR | ACCELERA-TION SENSOR | BAROMET-RIC SENSOR | MAGNETIC SENSOR | ULTRA-SONIC SENSOR |

24

ROM

21

RAM

22

MICROCONTROLLER

20

| MEASURING DEVICE | CALCULATION CIRCUIT | GPS MODULE | COMMUNICA-TION CIRCUIT | E C U |

9       10      12      13      14

## FIG.6A

## FIG.6B

FIG.7

*FIG.8*

1

41 — CPU

LOUD-
SPEAKER
45

42 — MEMORY

ALARM
LAMP
46

43 — MAP
INFOR-
MATION

COMMUNI-
CATION
CIRCUIT
47

44 — IMAGE
PROCESS-
ING CIRCUIT

48

32

40

MONITOR
49

FIG.9

*FIG.10*

*FIG.11*

FIG.12

*FIG.13*

```
                    ┌─────────────────────────┐
                    │  POSITION ESTIMATION    │
                    │ PROCESS BY MULTICOPTER  │
                    └─────────────────────────┘
                               │
                               ▼
         ┌────────────────────────────────────────┐
   S1    │       FLY WITH INSTRUCTION TO FLY       │
         └────────────────────────────────────────┘
                               │
                               ▼
   S2                    ╱           ╲
              ╱                                 ╲
     ◄───────  WIRELESS SIGNAL OUTPUT FROM
        NO      TRANSMITTER IS DETECTED?
              ╲                                 ╱
                    ╲           ╱
                         │ YES
                         ▼
         ┌────────────────────────────────────────┐
   S3    │          MEASURE DIRECTION OF          │
         │       ARRIVAL OF WIRELESS SIGNAL        │
         └────────────────────────────────────────┘
                         │
                         ▼
         ┌────────────────────────────────────────┐
   S4    │      ESTIMATE POSITION OF TRANSMITTER   │
         └────────────────────────────────────────┘
                         │
                         ▼
         ┌────────────────────────────────────────┐
   S5    │     ESTIMATE ITS OWN POSITION, AND     │
         │      OUTPUT POSITION INFORMATION        │
         └────────────────────────────────────────┘

                    SEARCH MODE
```

## FIG.14

MULTICOPTER 1

PROCESSING DEVICE 40

TRANSMIT INSTRUCTION TO FLY
S20

S1 — FLY WITH INSTRUCTION TO FLY

S2 — WIRELESS SIGNAL OUTPUT FROM TRANSMITTER IS DETECTED?

NO

YES

S10 — APPLY PREDETERMINED PROCESS TO WIRELESS SIGNAL, AND GENERATE PROCESSED SIGNAL

S11 — ESTIMATE ITS OWN POSITION, AND GENERATE POSITION INFORMATION

S12 — TRANSMIT PROCESSED SIGNAL AND POSITION INFORMATION

RECEIVE PROCESSED SIGNAL AND POSITION INFORMATION
S21

MEASURE DIRECTION OF ARRIVAL OF WIRELESS SIGNAL BASED ON PROCESSED SIGNAL
S22

ESTIMATE POSITION OF TRANSMITTER BASED ON MEASURED DIRECTION OF ARRIVAL OF WIRELESS SIGNAL AND POSITION INFORMATION OF AIRCRAFT
S23

SEARCH MODE

OUTPUT AUDIO ALARM FROM LOUDSPEAKER/DISPLAY ALARM MESSAGE ON MONITOR/ FLICKER ALARM LAMP
S24

END

*FIG.15*

*FIG.16*

*FIG.17*

FIG.18

## INTERNATIONAL SEARCH REPORT

| International application No. |
| --- |
| PCT/JP2017/026845 |

**A.  CLASSIFICATION OF SUBJECT MATTER**

*G01S5/04*(2006.01)i, *G08B25/04*(2006.01)i, *G08B25/10*(2006.01)i, *B64C27/08*(2006.01)n, *B64C39/02*(2006.01)n

According to International Patent Classification (IPC) or to both national classification and IPC

**B.  FIELDS SEARCHED**

Minimum documentation searched (classification system followed by classification symbols)
G01S5/04, G08B25/04-25/10, H01M12/06

Documentation searched other than minimum documentation to the extent that such documents are included in the fields searched
Jitsuyo Shinan Koho        1922–1996    Jitsuyo Shinan Toroku Koho    1996–2017
Kokai Jitsuyo Shinan Koho    1971–2017    Toroku Jitsuyo Shinan Koho    1994–2017

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 2011-112370 A  (NEC Corp.), 09 June 2011 (09.06.2011), paragraphs [0001] to [0047]; fig. 1 to 5 (Family: none) | 1-14 |
| Y | JP 2003-232843 A  (Mitsubishi Heavy Industries, Ltd.), 22 August 2003 (22.08.2003), paragraphs [0001] to [0038]; fig. 1 to 5, 8 (Family: none) | 1-14 |
| Y | JP 52-119092 A  (Mitsubishi Electric Corp.), 06 October 1977 (06.10.1977), page 2, upper right column, line 13 to page 3, upper left column, line 18; fig. 1 to 2 (Family: none) | 3-10,13-14 |

☐  Further documents are listed in the continuation of Box C.        ☐  See patent family annex.

| | |
| --- | --- |
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 15 September 2017 (15.09.17) | 03 October 2017 (03.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**REFERENCES CITED IN THE DESCRIPTION**

**Patent documents cited in the description**

- JP 5890942 B